# EUROPÄISCHE PATENTSCHRIFT

(11) **EP 1 317 614 B1**
(45) Veröffentlichungstag und Bekanntmachung des Hinweises auf die Patenterteilung: **21.12.2005**
(21) Anmeldenummer: 01967015.7
(22) Anmeldetag: 30.08.2001
(51) Int. Cl.: F02D 41/02, F01N 3/20

(54) **KOORDINATION VERSCHIEDENER ANFORDERUNGEN AN DIE ABGASTEMPERATUR UND ENTSPRECHENDE HEIZ- ODER KÜHL-MASSNAHMEN**
CO-ORDINATION OF DIFFERENT REQUIREMENTS OF THE EXHAUST GAS TEMPERATURE AND CORRESPONDING HEATING OR COOLING MEASURES
COORDINATION DE DIFFERENTES EXIGENCES LIEES A LA TEMPERATURE DES GAZ D'ECHAPPEMENT ET MESURES DE CHAUFFAGE OU DE REFROIDISSEMENT CORRESPONDANTES

(30) Priorität: 04.09.2000 DE 10043687
(43) Veröffentlichungstag der Anmeldung: 11.06.2003
(73) Patentinhaber: ROBERT BOSCH GMBH, 70442 Stuttgart (DE)
(72) Erfinder: WAGNER, Jens, 70182 Stuttgart (DE); KORING, Andreas, 71636 Ludwigsburg (DE); DAEUBEL, Ralf, 71706 Markgroeningen (DE); RITTMANN, Beate, 71706 Markgroeningen (DE); WINKLER, Klaus, 71277 Rutesheim (DE)
(86) Internationale Anmeldenummer: PCT/DE2001/003231
(87) Internationale Veröffentlichungsnummer: WO 2002/020965

(56) Entgegenhaltungen:
- EP-A- 0 896 142
- DE-A- 19 752 274
- US-A- 5 771 690

## Beschreibung

### Stand der Technik

Bei Fahrzeugen mit Verbrennungsmotor muß die Abgastemperatur in bestimmten Temperaturbereichen gehalten werden, um eine thermische Überlastung der Bauteile im Abgassystem zu vermeiden, die Betriebstemperatur von Katalysatoren (lightoff) im Abgasstrang zu erreichen oder zu halten oder um einen NOx-Speicherkat auf hohe Temperatur zu bringen um eingespeicherten Schwefel auszutragen.

Um die Katalysatoren im Abgasstrang aufzuheizen, wird oftmals der Zündzeitpunkt verzögert. Dadurch läuft die Verbrennung nicht mehr optimal ab. Bei gleichem erzeugtem Moment sind die Abgastemperaturen dann heißer.

Eine thermische Überlastung der Bauteile im Abgassystem wird üblicherweise durch folgende Eingriffe verhindert:

Der späteste Zündwinkel wird abhängig vom Betriebspunkt des Motors beschränkt. Der Zündwinkel kann beispielsweise zum Zwecke eines motorischen Katheizens oder wegen eines Momentenvorhaltes für schnelle Reglereingriffe später liegen als der optimale Zündwinkel für maximales Drehmoment und Wirkungsgrad.

Für eine kurzzeitige Verzögerung der Zündung ist nur die Brenngrenze ausschlaggebend. Bei dauerhaft später Zündung wird maximal der Zündwinkel zugelassen, bei dem im Auslaßkrümmer kritische Temperaturen noch nicht erreicht werden. Diese Spätgrenze wird nur aufgrund des Betriebszustands des Motors ermittelt. Dabei ist der Betriebszustand beispielsweise durch Werte für Luftfüllung, Motorleistung und -drehzahl definiert.

Dieser Eingriff ist vor allem für den Teillastbereich relevant. Er kann als passive Einschränkung zum Bauteileschutz gesehen werden.

Eine weitere Eingriffsmöglichkeit zur Verhinderung einer thermischen Überlastung ist eine Anfettung des Gemisches abhängig von modellierten oder gemessenen Temperaturen im Abgassystem.

Überschreiten die modellierten/gemessenen Temperaturen im Abgassystem kritische Grenzen, so wird fetter Motorbetrieb gefordert.

Durch die Verdampfungsenthalpie des überschüssigen Kraftstoffes wird das Abgas gekühlt.
Dieser Eingriff ist vor allem für Betriebspunkte nahe Vollast relevant. Er kann als aktiver Eingriff gesehen werden.

Für eine Heizphase direkt nach Start ist die Beschränkung der Zündwinkel ein ausreichender Bauteileschutz: Der Abgastrakt ist noch kalt. Daher kann eine thermische Schädigung auch ausgeschlossen werden, falls die Abgastemperaturen kurzzeitig zu heiß sind. Bei Motoren im Magerbetrieb mit NOx-Speicherkat (z. B. Motoren mit Benzin-Direkteinspritzung) muß der NOx-Speicherkat zyklisch entschwefelt werden. Dazu muß während des Betriebes der NOx-Speicherkat auf Temperaturen über 600°C aufgeheizt werden. Dabei können im Teillastbereich kritische Temperaturen im Abgasstrang erreicht werden.

Ein magerer Motorbetrieb ist dagegen nur möglich, falls der NOx-Speicherkatalysator in einem Temperaturfenster von 200°C-450°C ist. Das Abgassystem ist normalerweise so ausgelegt, dass diese Temperaturen über einen weiten Betriebsbereich gewährleistet sind. Deswegen können Maßnahmen zur Abgaskühlung notwendig sein. Die einfachste Variante besteht darin, den Abgasstrang durch Fahrtluft anströmen zu lassen und den Wärmeverlust durch Konvektion zu erhöhen.

Für eine Heizphase direkt nach Start ist die Beschränkung der Zündwinkel ein ausreichender Bauteileschutz: Der Abgastrakt ist noch kalt. Daher kann eine thermische Schädigung auch ausgeschlossen werden, falls die Abgastemperaturen kurzzeitig zu heiß sind. Für die Entschwefelung eines NOx-Speicherkats muß dieser während des normalen Motorbetriebs auf Temperaturen über 600°C aufgeheizt werden. Dabei können gerade bei Teillast kritische Temperaturen im Abgasstrang erreicht werden. Durch die oben erwähnten Kühlmaßnahmen für den NOx-Speicherkat kann dieses Problem noch verschärft werden. Bauteile, die stromaufwärts des NOx-Speicherkats angeordnet sind, werden dann nahe ihrer kritischen Temperatur sein.

Bei bisherigen Konzepten sind Eingriffe zum Bauteileschutz, die eine Beschränkung der Abgastemperaturen bezwecken und Eingriffe zum Aufheizen der Katalysatoren, die eine Anhebung Abgastemperaturen bezwecken, unabhängig voneinander.

Dies ist problematisch, weil Heizmaßnahmen Maßnahmen zur Abgaskühlung verursachen können. Wird z. B. wegen später Zündwinkel gleichzeitig das Luft-Kraftstoffgemisch angefettet, entsteht ein Verbrauchsnachteil, falls die kritischen Temperaturen auch durch Beschränkung der Zündwinkel verhindert werden können. Außerdem werden die Emissionen unnötig verschlechtert.

Um die Betriebstemperaturen des NOx-Speicherkatalysators für weite Betriebsbereiche einzuhalten, können weitere aktive Abgas-Kühlmaßnahmen ergriffen werden (Ansteuerbare Anströmung des Abgasstrangs über Klappe, Umleiten des Abgases über Wärmetauscher). Diese Kühlmaßnahmen können eine Anfettung unnötig werden lassen.

Vor diesem Hintergrund besteht die Aufgabe der Erfindung in einer Vermeidung von Verbrauchsnachteilen infolge von Abgas-Heizmaßnahmen und Abgas-Kühlmaßnahmen.

Diese Aufgabe wird dadurch gelöst, daß zur Beeinflussung der Abgastemperatur bei einem Verbrennungsmotor, bei dem je nach Temperaturanforderung Maßnahmen zur Abgastemperatursteigerung, zur Abgastemperaturbeschränkung oder zur Abgastemperatursenkung durchgeführt werden können, diese Temperaturforderungen priorisiert werden, wobei die Temperaturbeschränkung wegen Bauteileschutz die höchste Priorität besitzt und wobei die resultierende Temperaturforderung durch Heiz- oder Kühlmaßnahmen so umgesetzt wird, dass Heizmaßnahmen und Kühlmaßnahmen nie gleichzeitig zum Einsatz kommen.

Eine weitere Ausführungsform der Erfindung sieht vor, daß eine Temperaturforderung zur Entschwefelung eines Katalysators höher priorisiert ist als eine Temperaturforderung zum Normalbetrieb des Katalysators.

Eine weitere Ausführungsform zeichnet sich durch eine Spätverstellung der Zündung als Heizmaßnahme aus, wobei der späteste Zündwinkel abhängig vom Betriebspunkt des Motors beschränkt ist.

Gemäß einer weiteren Ausführungsform ist der Betriebszustand wenigstens durch Werte für Luftfüllung, Drehzahl und/oder Motorleistung definiert.

Eine weitere Ausführungsform sieht eine Anfettung des Gemisches abhängig von modellierten oder gemessenen Temperaturen im Abgassystem als Kühlmaßnahme vor.

Im Rahmen der Erfindung kann die Abgastemperatur und/oder die Temperatur eines Katalysators gemessen oder aus Betriebsgrößen des Motors modelliert werden.

Die Erfindung richtet sich auch auf eine elektronische Steuereinrichtung zur Durchführung der Verfahren nach den genannten Ausführungsformen.

Erfindungsgemäß werden zur Lösung die unterschiedlichen Temperaturforderungen koordiniert. Dabei entstehen Temperaturforderungen z. B. aus folgenden Gründen:
Forderung nach Temperaturerhöhung für Entschwefelung des NOx-Speicherkats.
Forderung nach Temperaturbeschränkung für Bauteileschutz
Forderung nach Temperaturerhöhung für Betrieb eines 3-Wege-Katalysators
Forderung nach Temperaturerhöhung oder -Beschränkung für Betrieb eines NOx-Speicherkats

Diese Temperaturforderungen werden erfindungsgemäß priorisiert: Die Temperaturbeschränkung wegen Bauteileschutz muß immer gewährleistet sein. Die Temperaturforderungen zum Betrieb des NOx-Speicherkatalysators sind dagegen nicht relevant, falls dieser entschwefelt werden muß oder Magerbetrieb nicht sinnvoll ist.

Die resultierende Temperaturforderung wird dann durch Heiz- oder Kühlmaßnahmen umgesetzt.

Durch die Koordination wird auch gewährleistet, dass Heizmaßnahmen und Kühlmaßnahmen nie gleichzeitig zum Einsatz kommen.

### Beschreibung

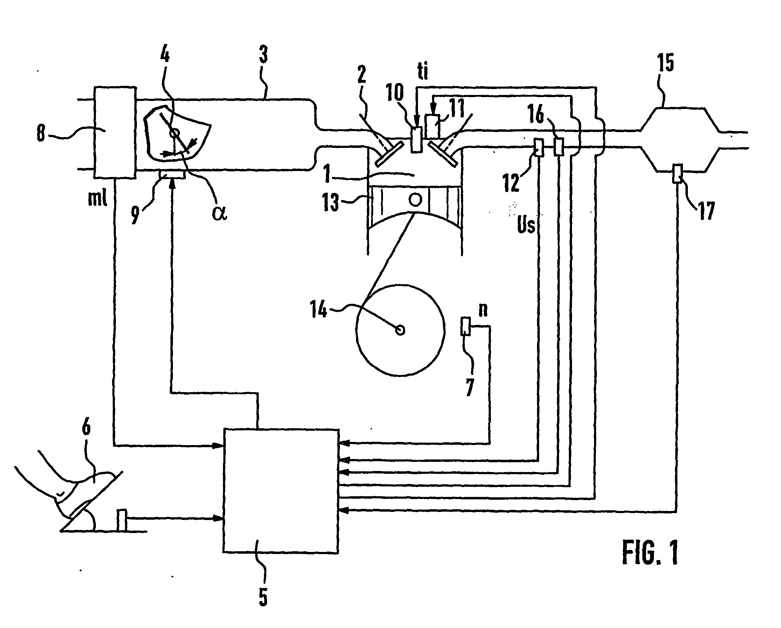

Im folgenden wird ein Ausführungsbeispiel der Erfindung mit Blick auf die Figur erläutert. Dabei zeigt Fig. 1 das technische Umfeld der Erfindung.

Die 1 in der Fig. 1 repräsentiert den Brennraum eines Zylinders eines Verbrennungsmotors. Über ein Einlaßventil 2 wird der Zustrom von Luft zum Brennraum gesteuert. Die Luft wird über ein Saugrohr 3 angesaugt. Die Ansaugluftmenge kann über eine Drosselklappe 4 variiert werden, die von einem Steuergerät 5 angesteuert wird. Dem Steuergerät werden Signale über den Drehmomentwunsch des Fahrers, bspw. über die Stellung eines Fahrpedals 6, ein Signal über die Motordrehzahl n von einem Drehzahlgeber 7, ein Signal über die Menge ml der angesaugten Luft von einem Luftmengenmesser 8 und ein Signal Us über die Abgaszusammensetzung und/oder Abgastemperatur von einem Abgassensor 12 zugeführt. Abgassensor 12 kann beispielsweise eine Lambdasonde sein, deren Nernstspannung den Sauerstoffgehalt im Abgas angibt und deren Innenwiderstand als Maß für die Sonden-, Abgas- und/oder Katalysator-Temperatur herangezogen wird. Das Abgas wird durch wenigstens einen Katalysator 15 geführt, in dem Schadstoffe aus dem Abgas konvertiert und/oder vorübergehend gespeichert werden.

Aus diesen und ggf. weiteren Eingangssignalen über weitere Parameter des Verbrennungsmotors wie Ansaugluft- und Kühlmitteltemperatur und so weiter bildet das Steuergerät 5 Ausgangssignale zur Einstellung des Drosselklappenwinkels alpha durch ein Stellglied 9 und zur Ansteuerung eines Kraftstoffeinspritzventils 10, durch das Kraftstoff in den Brennraum des Motors dosiert wird. Außerdem wird durch das Steuergerät die Auslösung der Zündung über eine Zündeinrichtung 11 gesteuert.

Der Drosselklappenwinkel alpha und die Einspritzimpulsbreite ti sind wesentliche, aufeinander abzustimmende Stellgrößen zur Realisierung des gewünschten Drehmomentes, der Abgaszusammensetzung und der Abgastemperatur. Eine weitere wesentliche Stellgröße zur Beeinflussung dieser Größen ist Winkellage der Zündung relativ zur Kolbenbewegung. Die Bestimmung der Stellgrößen zur Einstellung des Drehmomentes ist Gegenstand der DE 1 98 51 990, die insoweit in die Offenbarung einbezogen sein soll.

Weiterhin steuert das Steuergerät weitere Funktionen zur Erzielung einer effizienten Verbrennung des Kraftstoff/Luftgemisches im Brennraum, beispielsweise eine nicht dargestellte Abgasrückführung und/oder Tankentlüftung. Die aus der Verbrennung resultierende Gaskraft wird durch Kolben 13 und Kurbeltrieb 14 in ein Drehmoment gewandelt.

In diesem technischen Umfeld kann die Katalysatortemperatur gemessen werden (Sensoren 16 und oder 17) oder aus Betriebsgrößen des Motors modelliert werden. Die Modellierung von Temperaturen im Abgastrakt von Verbrennungsmotoren ist beispielsweise aus der US 5 590 521 bekannt. Gegenüber der Position im oder vor Katalysator wird für BDE-Systeme eher eine Position nach einem Vorkat aber vor einem NOx-Speicherkatalysator vorzuziehen sein. Die Position von Temperatursensoren ist daher nicht auf die dargestellten Positionen in oder vor einem Katalysator beschränkt. Es kommt daher auch eine Position nach dem Katalysator in Frage.

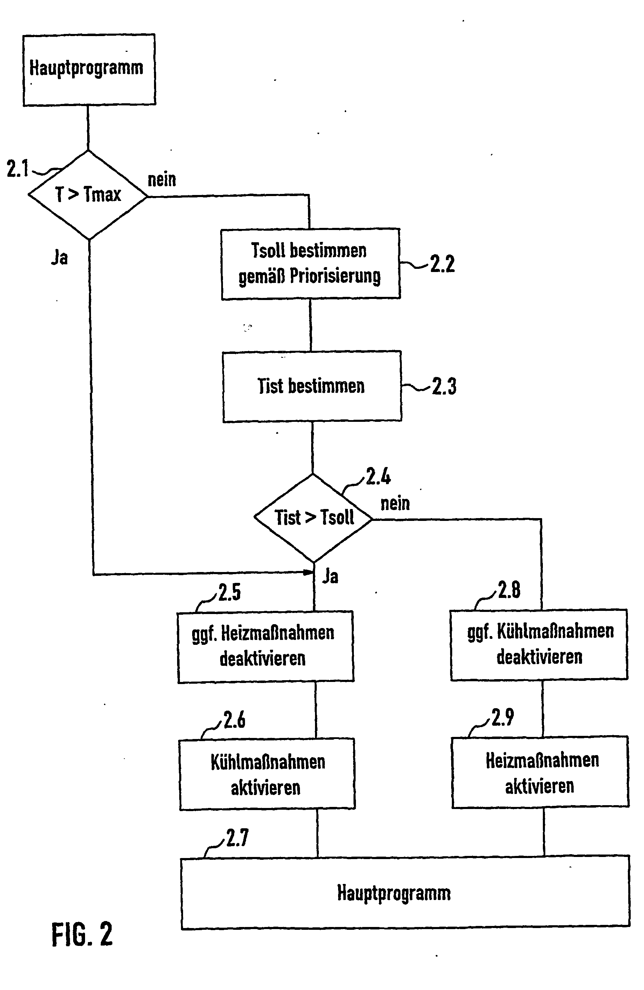

Fig. 2 zeigt ein Flußdiagramm als Ausführungsbeispiel des erfindungsgemäßen Verfahrens. In einem Schritt 2.1, der aus einem übergeordneten Motorsteuerungsprogramm aus erreicht wird, erfolgt ein Vergleich der Abgas- oder Katalysatortemperatur mit einem maximal zulässigen Wert Tmax. Dieser Schwellenwertvergleich dient dem Bauteileschutz vor Überhitzung. Er hat daher die höchste Priorität. Überschreitet die Abgas- oder Katalysatortemperatur den maximal zulässigen Wert, so erfolgt im Schritt 2.5 eine Deaktivierung von gegebenenfalls aktivierten Heizmaßnahmen und eine Aktivierung von Kühlmaßnahmen. Alternativ zu dieser obligatorischen Aktivierung von Kühlmaßnahmen kann auch nach dem Deaktivieren der Heizmaßnahmen geprüft werden, ob zusätzliche Kühlmaßnahmen erforderlich sind, oder ob die Deaktivierung der Heizmaßnahmen bereits ausreicht, um den Bauteileschutz zu gewährleisten. In diesem Fall würde der Schritt 2.6 umgangen und direkt in das Hauptprogramm zur Motorsteuerung zurückverzweigt. Von dort wird nach der Erfüllung vorbestimmter Bedingungen, beispielsweise nach Ablauf einer Wartezeit erneut in den Schritt 2.1 verzweigt. Wenn die Abfrage im Schritt 2.1 verneint wird, erfolgt im Schritt 2.2 eine Bestimmung eines Temperatursollwertes Tsoll gemäß den oben genannten Priorisierungskriterien. Anschließend erfolgt im Schritt 2.3 eine Bestimmung eines Temperaturistwertes Tist durch Messung oder durch Berechnung aus Betriebsparametern. Zur Messung kann ein separater Sensor im Abgas vor oder hinter dem Katalysator oder im Katalysator vorhanden sein. Ein Temperaturwert kann aber beispielsweise auch aus dem temperaturabhängigen Innenwiderstand der Abgassonde 12 gewonnen werden. Schritt 2.4 dient zum Vergleich der Soll- und der Ist-Temperatur. Bei zu hoher Ist-Temperatur werden im Schritt 2.5 Heizmaßnahmen deaktiviert, sofern welche aktiv waren und im Schritt 2.6 kann sich eine oder mehrere Kühlmaßnahmen anschließen. Auch hier kann vor dem Aktivieren von Kühlmaßnahmen geprüft werden, ob die Deaktivierung von Heizmaßnahmen bereits ausreichend war, um das Temperaturziel zu erreichen. Schritt 2.7 repräsentiert die Rückkehr in das übergeordnete Motorsteuerungsprogramm. Überschreitet die Ist-Temperatur Tist dagegen im Schritt 2.4 die Solltemperatur Tsoll, werden im Schritt 2.8 gegebenenfalls Kühlmaßnahmem deaktiviert und im Schritt 2.9 können Heizmaßnahmen aktiviert werden, soweit dies erforderlich ist. Die Aktivierung der Heizmaßnahme kann unterbleiben, wenn die Deaktivierung der Kühlmaßnahme bereits ausreichend war, um den Temperatursollwert zu erreichen. Auf jeden Fall erfolgt im Schritt 2.7 eine Rückkehr in das übergeordnete Motorsteuerungsprogramm (Hauptprogramm) .

Durch dieses Verfahren ergibt sich beispielsweise für eine Temperaturforderung zur Entschwefelung des Katalysators der folgende Ablauf:

Steht eine Temperaturforderung zur Entschwefelung an, so wird diese durch späte Zündung (schlechter Wirkungsgrad) umgesetzt. Wenn die Temperaturen im Abgassystem dabei kritische Werte erreichen, wird auch eine Beschränkung dieser Temperaturen für den Bauteileschutz notwendig. Es wird dann, das heißt für die Beschränkung, zuerst der Zündzeitpunkt wieder zum Optimum verschoben (verbesserter Wirkungsgrad). Dies entspricht gewissermaßen einer Deaktivierung einer Heizmaßnahme. Erst wenn keine aktiven Heizmaßnahmen mehr anstehen (bestmöglicher Wirkungsgrad), werden aktive Kühlmaßnahmen eingesetzt. Sofern es möglich ist, eine Luftkühlung des Abgaskrümmers anzusteuern, wird diese zuerst eingesetzt (alternativ: Umleitung des Abgases über einen Wärmetauscher). Erst als letzte Maßnahme wird das Luft-Kraftstoffgemisch angefettet. Dadurch wird gewährleistet, daß Emissionen und Kraftstoffverbrauch so gering wie möglich bleiben.

Dieses Vorgehen setzt eine gute Modellierung der Abgastemperaturen voraus. Beste Ergebnisse können über direktes Messen der Abgastemperaturen erreicht werden.

## Patentansprüche

1. Verfahren zur Beeinflussung der Abgastemperatur bei einem Verbrennungsmotor, bei dem je nach Temperaturanforderung Maßnahmen zur Abgastemperatursteigerung, zur Abgastemperaturbeschränkung oder zur Abgastemperatursenkung durchgeführt werden können, **dadurch gekennzeichnet, dass** diese Temperaturforderungen priorisiert werden, wobei die Temperaturbeschränkung wegen Bauteileschutz die höchste Priorität besitzt und wobei die resultierende Temperaturforderung durch Heiz- oder Kühlmaßnahmen so umgesetzt wird, das Heizmaßnahmen und Kühlmaßnahmen nie gleichzeitig zum Einsatz kommen.

2. Verfahren nach Anspruch 1, **dadurch gekennzeichnet, daß** eine Temperaturforderung zur Entschwefelung eines Katalysators höher priorisiert ist als eine Temperaturforderung zum Normalbetrieb des Katalysators.

3. Verfahren nach Anspruch 1, **gekennzeichnet, durch** eine Spätverstellung der Zündung als Heizmaßnahme, wobei der späteste Zündwinkel abhängig vom Betriebspunkt des Motors beschränkt ist.

4. Verfahren nach Anspruch 1, **gekennzeichnet, dadurch gekennzeichnet, daß** der Betriebszustand wenigstens durch Werte für Luftfüllung, Drehzahl und/oder Motorleistung definiert ist.

5. Verfahren nach Anspruch 1, **gekennzeichnet durch** eine Anfettung des Gemisches abhängig von modellierten oder gemessenen Temperaturen im Abgassystem als Kühlmaßnahme.

6. Verfahren nach Anspruch 1, **dadurch gekennzeichnet, daß** die Abgastemperatur und/oder die Temperatur eines Katalysators gemessen wird oder aus Betriebsgrößen des Motors modelliert wird.

7. Elektronische Steuereinrichtung mit Mitteln ausgelegt zur Durchführung der Verfahren nach den Ansprüchen 1 bis 6.

## Claims

1. Method for influencing the exhaust gas temperature in an internal combustion engine, in which measures for increasing the exhaust gas temperature, for limiting the exhaust gas temperature or for reducing the exhaust gas temperature can be carried out depending on the temperature requirement, **characterized in that** these temperature requirements are prioritized, the temperature limiting having the highest priority, with a view to component protection, and the resulting temperature requirement being implemented by heating or cooling measures, in such a way that heating measures and cooling measures are never used simultaneously.

2. Method according to Claim 1, **characterized in that** a temperature requirement for desulphurization of a catalytic converter is assigned a higher priority than a temperature requirement for normal operation of the catalytic converter.

3. Method according to Claim 1, **characterized by** a late shift in the ignition as a heating measure, the latest ignition angle being limited as a function of the engine operating point.

4. Method according to Claim 1, **characterized in that** the operating state is defined at least by values for air charge, engine speed and/or engine power.

5. Method according to Claim 1, **characterized by** enrichment of the mix as a function of modelled or measured temperatures in the exhaust system as a cooling measure.

6. Method according to Claim 1, **characterized in that** the exhaust gas temperature and/or the temperature of a catalytic converter is measured or is modelled from engine operating variables.

7. Electronic control device with means designed to carry out the methods according to Claims 1 to 6.

## Revendications

1. Procédé permettant d'influer sur la température des gaz d'échappement d'un moteur à combustion interne, selon lequel d'après des exigences de température, on prend des mesures d'augmentation de température des gaz d'échappement, de limitation de température des gaz d'échappement ou de réduction de température des gaz d'échappement,
**caractérisé en ce que**
ces exigences de température sont mises en ordre de priorité, la limitation de température possédant, en raison de la nécessité de protection des composants, la priorité la plus élevée et l'exigence de température en résultant étant obtenue par des mesures de chauffage ou de refroidissement de telle sorte que les mesures de chauffage et les mesures de refroidissement ne sont jamais utilisées en même temps.

2. Procédé selon la revendication 1,
**caractérisé en ce qu'**
une exigence de température pour la désulfuration d'un catalyseur possède une priorité plus élevée qu'une exigence de température pour le fonctionnement normal du catalyseur.

3. Procédé selon la revendication 1,
**caractérisé par**
un retardement de l'allumage en tant que mesure de chauffage, l'angle d'allumage le plus tardif étant limité en fonction du point de fonctionnement du moteur.

4. Procédé selon la revendication 1,
**caractérisé en ce que**
l'état de fonctionnement est défini au moins par des valeurs d'admission d'air, de régime et/ou de puissance du moteur.

5. Procédé selon la revendication 1,
**caractérisé par**
un enrichissement du mélange en fonction de températures modélisées ou mesurées dans le système d'échappement en tant que mesure de refroidissement.

6. Procédé selon la revendication 1,
**caractérisé en ce que**
la température des gaz d'échappement et/ou la température d'un catalyseur est/sont mesurée(s) ou modélisée(s) à partir de grandeurs de fonctionnement du moteur.

7. Dispositif de commande électronique, comprenant des moyens permettant de mettre en oeuvre les procédés selon les revendications 1 à 6.
